# EUROPÄISCHE PATENTSCHRIFT

(11) **EP 3 071 615 B1**
(45) Veröffentlichungstag und Bekanntmachung des Hinweises auf die Patenterteilung: **30.12.2020**
(21) Anmeldenummer: 14793807.0
(22) Anmeldetag: 23.10.2014
(51) Int. Cl.: C08G 18/48, C08G 18/66, C08G 18/32, C08G 18/18, C08G 101/00, C08G 18/76, C08G 18/08, C08J 9/00

(54) **VERWENDUNG VON PENTAETHYLENHEXAMIN BEI DER HERSTELLUNG VON POLYURETHANSYSTEMEN**
USE OF PENTAETHYLENEHEXAMINE IN PREPARING POLYURETHANE SYSTEMS.
UTILISATION DE PENTAETHYLÈNE HEXAMINE DANS LA PRÉPARATION DES SYSTÈMES POLYURÉTHANE

(30) Priorität: 18.11.2013 DE 102013223441
(43) Veröffentlichungstag der Anmeldung: 28.09.2016
(73) Patentinhaber: Evonik Operations GmbH, 45128 Essen (DE)
(72) Erfinder: EMMRICH-SMOLCZYK, Eva, 45133 Essen (DE); FIEDEL, Olga, 45131 Essen (DE); VIDAKOVIC, Mladen, 47269 Duisburg (DE)
(74) Vertreter: Evonik Patent Association
(86) Internationale Anmeldenummer: PCT/EP2014/072728
(87) Internationale Veröffentlichungsnummer: WO 2015/071065

(56) Entgegenhaltungen:
- DE-A1-102012 206 193
- DE-B- 1 282 962
- US-A1- 2010 113 634

## Beschreibung

Die Erfindung liegt auf dem Gebiet der Polyurethane und betrifft die Verwendung von Pentaethylenhexamin bei der Herstellung von Polyurethanschaumstoffen.

Polyurethansysteme im Sinne dieser Erfindung sind z. B. Polyurethanbeschichtungen, Polyurethanadhäsive, Polyurethandichtmittel, Polyurethanelastomere oder Polyurethanschäume/ - schaumstoffe.

Polyurethanschaumstoffe finden aufgrund ihrer hervorragenden mechanischen und physikalischen Eigenschaften in den verschiedensten Bereichen Verwendung. Einen besonders wichtigen Markt für verschiedenste Typen von PUR-Schäumen, wie konventionelle Weichschäume auf Ether- und Esterpolyolbasis, Kaltschäume (häufig auch als HR-Schäume bezeichnet), Hartschäume, Integralschäume und mikrozellulare Schäume, sowie Schäume deren Eigenschaften zwischen diesen Klassifizierungen liegen, wie z. B. halbharte Systeme, stellt die Automobil- und die Möbelindustrie dar. Es werden z. B. Hartschäume als Dachhimmel, Esterschäume zur Innenverkleidung der Türen sowie für ausgestanzte Sonnenblenden, Kalt- und Weichschäume für Sitzsysteme und Matratzen verwendet.

Problematisch bei der Herstellung und Lagerung von Polyurethanschäumen ist die Freisetzung von Aldehyden, insbesondere von Formaldehyd. Viele Verbraucher wollen wegen gesundheitlicher Bedenken formaldehydfreisetzende Produkte nach Möglichkeit nicht mehr verwenden, unabhängig davon, ob gesundheitliche Bedenken tatsächlich gerechtfertigt sind. Nicht zuletzt deshalb haben in den USA und Europa z.B. die Schaumhersteller der Möbelindustrie ein freiwilliges Programm "CertiPUR" aufgelegt, welches als Standard eine Grenze für die Formaldehydemissionen von 0,1 mg/m³ in Matratzen vorsieht, gemessen gemäß ASTM Methode D5116-97 "Small Chamber Test" bei Konditionierung über 16 Stunden. Der Europäische Kammertest erlaubt 5 µg/l an Formaldehyd und DMF in frischen Schäumen und 3 µg/l in Schäumen, die älter als 5 Tage sind.

Es besteht somit sowohl von Verbraucher- wie auch von Industrieseite der Wunsch nach solchen Polyurethanschäumen, welche so wenig wie möglich Formaldehyd freisetzen.

Um diesem Wunsch zu entsprechen, gab es bereits unterschiedliche Ansätze. So geht die WO 2009/117479 davon aus, dass der Formaldehyd aus dem Rohstoff stammt und insbesondere in den eingesetzten Amin-Katalysatoren (tertiären Aminen) enthalten sein soll. Diese Schrift schlägt zum Erreichen niedriger Formaldehyd-Emissionen deshalb vor, dem tertiären Amin-Katalysator ein primäres Amin zuzugeben. Vorzugsweise wird Dimethylaminopropylamin eingesetzt.

DE 10003156 A1 beschäftigt sich nicht unmittelbar mit emissionsarmen Schaumstoffen, sondern mit der Aufgabe, Polymere mit hervorragenden Adsorptionsfähigkeiten für verschiedene Verbindungen, insbesondere für Schwermetallionen zu entwickeln. Zur Lösung dieser Aufgabe werden dann Polyurethanschaumstoffe vorgeschlagen, die Ethylenimin, Polyethylenimin, Polyvinylamin, carboxymethylierte Polyethylenimine, phosphonomethylierte Polyethylenimine, quarternisierte Polyethylenimine und/oder dithiocarbamitisierte Polyethylenimine enthalten. Diese Polyurethanschaumstoffe können auch zur Adsorption organischer Substanzen wie bspw. Formaldehyd eingesetzt werden.

DE 10258046 A1 beschäftigt sich mit der Aufgabe, Polyurethanschaumstoffe herzustellen, die einen reduzierten Gehalt an Formaldehydemission aufweisen. Im Unterschied zu DE 10003156 A1 liegt die Aufgabe der DE 10258046 A1 also in der Reduzierung der Formaldehydemissionen aus dem PUR-Schaumstoff als solchen, und nicht in der Adsorption von Formaldehyd aus der Umgebungsluft. Zur Lösung dieser Aufgabe wird dann ein Verfahren vorgeschlagen, dass die durch Zugabe von Aminogruppen aufweisenden Polymeren zu dem Polyurethanschaumstoff vorsieht, wobei die Zugabe vor, während oder nach der Herstellung des Polyurethanschaumstoffs erfolgen kann.

Im Rahmen der vorliegenden Erfindung wurde festgestellt, dass nicht nur die Formaldehydemission eines Polyurethanschaumstoffes problematisch ist, welche mit zunehmender Lagerzeit unter gewöhnlichen Bedingungen, also bei Anwesenheit von Licht und Luft, grundsätzlich steigt. Es konnte darüber hinaus gefunden werden, dass bei Lagerung und insbesondere bei längerer Lagerung eines Polyurethanschaumstoffes auch die Emissionen an Acetaldehyd problematisch werden können, und zwar ausgerechnet dann, wenn zur Formaldehydreduktion auf Polyethylenimine zurückgegriffen wird. Ohne spezielle Formaldehydfänger hergestellte Polyurethanschaumstoffe weisen zwar auch eine Acetaldehydemission auf, diese ist in der Regel allerdings sehr geringfügig. Je nach Formulierung kann teilweise auch eine Emission von Benzaldehyd (z.B. bestimmbar analog VDA 278) oder Acrolein (z.B. bestimmbar über diverse Kammertestmethoden) nachgewiesen werden.

Dem Fachmann sind unterschiedliche analytische Methoden zur Bestimmung von Aldehyd Emissionen bekannt. Beispielhaft seien hier VDA 275, VDA 277 oder auch VDA 278 genannt, ebenso sei auf diverse Kammertestmethoden hingewiesen. VDA ist der Verband der Automobilindustrie (www.vda.de). "VDA 275" liefert ein Meßverfahren zur Bestimmung der Formaldehydabgabe nach der modifizierten Flaschen-Methode. Ein anwendbares Meßverfahren wird auch im Beispielteil dieser Erfindung genau erläutert.

Überraschenderweise konnte jetzt gefunden werden, dass gerade bei Verwendung der in DE 10003156 A1 und DE 10258046 A1 genannten Verbindungen, wie z.B. der Polyethylenimine, zwar ein positiver Einfluss auf die Formaldehydemission beobachtet werden kann, dieser jedoch leider mit einer überaus drastischen Erhöhung der Acetaldehydemission einhergeht, so dass diese z.B. um das 50-fache ansteigt, verglichen mit Systemen ohne Einsatz der genannten Verbindungen, wie z.B. der Polyethylenimine. Ein solch starker Anstieg der Acetaldehydemission ist nicht wünschenswert. Denn auch hier bestehen grundsätzliche gesundheitliche Bedenken und außerdem hat der Acetaldehyd einen sehr stechenden Geruch.

Deshalb besteht bei der Bereitstellung von Polyurethanen, insbesondere Polyurethanschäumen, immer noch Bedarf an Lösungen, welche eine Reduzierung der Formaldehydemission ermöglichen, aber keinen so starken Anstieg bei der Acetaldehydemission mit sich bringen.

Aufgabe der vorliegenden Erfindung war deshalb die Bereitstellung von Polyurethanen, insbesondere Polyurethanschäumen, welche eine reduzierte Formaldehydemission aufweisen und bei denen die Acetaldehyd-Emission bei Lagerung nicht so stark steigt, wie dies beim aus dem Stand der Technik bekannten Einsatz von Polyethyleniminen (PEI) der Fall ist.

Überraschenderweise konnte nun gefunden werden, dass der Einsatz von Pentaethylenhexamin die Lösung dieser Aufgabe ermöglicht.

Gegenstand der vorliegenden Erfindung ist die Verwendung von Pentaethylenhexamin gemäß Anspruch 1 zur Herstellung von Polyurethanschaumstoffen, bevorzugt durch Umsetzung mindestens einer Polyolkomponente mit mindestens einer Isocyanatkomponente in Gegenwart eines oder mehrerer Katalysatoren, die die Reaktionen Isocyanat-Polyol und/oder Isocyanat-Wasser und/oder die Isocyanat-Trimerisierung katalysieren, wobei die Umsetzung in Gegenwart von Pentaethylenhexamin erfolgt.

Dieser Gegenstand löst die erfindungsgemäße Aufgabe. Immer dann also, wenn ein Verfahren zur Herstellung von Polyurethanschaum in Gegenwart von Pentaethylenhexamin durchgeführt wird, wird die Bereitstellung von Polyurethanschäumen ermöglicht, welche eine reduzierte Formaldehydemission aufweisen, aber keinen so starken Anstieg bei der Acetaldehyd-Emission zeigen, wie er beim Einsatz von Polyethyleniminen beobachtet wird. Vorteilhafterweise kommt es sogar zu gar keinem Anstieg der Acetaldehyd-Emission.

Der Erfindungsgegenstand ermöglicht es, dass sogar bei Lagerung über einen längeren Zeitraum die Emission von Formaldehyd zuverlässig minimiert oder vorteilhafterweise sogar vollständig verhindert werden kann. Dabei kann der starke Anstieg der Acetaldehydemission bei Lagerung, der bei PEI-Einsatz beobachtet wird, vorteilhafterweise so begrenzt werden, dass es zu kaum einer oder gar keiner negativen Beeinflussung der Acetaldehydemission kommt, zumindest aber nicht zu einer so drastischen Erhöhung des Gehalts an Acetaldehyd im Polyurethanschaum um z.B. das 50-fache, wie dies beim Einsatz der PEI der Fall ist. Es wird also zumindest eine deutliche Reduktion des Anstiegs der Acetaldehydemission bei Lagerung erzielt. Insbesondere kann selbst nach einer Lagerung von 5 Monaten die Erhöhung des Gehalts an Acetaldehyd im Polyurethanschaum vorteilhafterweise auf maximal das 2,5-fache begrenzt werden verglichen mit einem Schaum, dem keine Additive zur Verminderung der Formaldehyd Emissionen zugegeben wurde. Dies ist eine erhebliche Verbesserung gegenüber jenen Vorschlägen aus dem Stand der Technik, welche einen PEI-Einsatz beinhalten.

Insbesondere kann durch die vorliegende Erfindung die Emission von Formaldehyd aus dem fertigen Polyurethansystem (insbesondere Polyurethanschaum) auch nach einer Lagerung von 5 Monaten auf einen Wert von vorteilhafterweise maximal 0,02 mg Formaldehyd/kg PU-System (PU-Schaum), vorzugsweise bestimmbar gemäß VDA 275 (gemäß der modifizierten Vorgehensweise im Beispielteil), sicher begrenzt werden.

Die Erfindung ermöglicht somit zum ersten Mal die Bereitstellung von Polyurethanschaum, welcher nicht nur mit Blick auf die Formaldehydemission, sondern auch mit Blick auf die Acetaldehydemission sehr gute Resultate liefert. Durch Zugabe des Pentaethylenhexamin lassen sich zum ersten Mal Polyurethanschäume mit verminderten Formaldehydemissionen herstellen, bei denen die Acetaldehydemissionen kaum oder gar nicht negativ beeinflusst werden und bei denen vorzugsweise auch ungewöhnlichere Aldehyde wie z. B. Propionaldehyd, Benzaldehyd oder Acrolein absorbiert werden können.

Ein zusätzlicher Vorteil der Erfindung liegt darin, dass eine beschleunigte Umsetzung der Reaktanten erlaubt wird, verglichen mit Verfahren, bei denen kein Pentaethylenhexamin zum Einsatz kommt.

Die erfindungsgemäß eingesetzten Verbindungen, die Verwendung der Verbindungen zur Herstellung der Polyurethansystem bzw. -schäume sowie die Polyurethansystem bzw. -schäume selbst werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in Gewichts-%. Werden nachfolgend Mittelwerte angegeben, so handelt es sich, wenn nicht anders angegeben um das Zahlenmittel. Werden nachfolgend Stoffeigenschaften, wie z. B. Viskositäten oder ähnliches angegeben, so handelt es sich, wenn nicht anders angegeben, um die Stoffeigenschaften bei 25 °C. Werden in der vorliegenden Erfindung chemische (Summen-) Formeln verwendet, so können die angegebenen Indizes sowohl absolute Zahlen als auch Mittelwerte darstellen. Bei polymeren Verbindungen stellen die Indizes vorzugsweise Mittelwerte dar.

In Abhängigkeit von dem System, in das das Pentaethylenhexamin später eingearbeitet wird, kann es von Vorteil sein, es in einem optionalen Folgeschritt zumindest teilweise mit Funktionalisierungsreagenzien umzusetzen, um solche Eigenschaften wie Viskosität, Löslichkeit, Polarität und Mischbarkeit möglichst systemadäquat einzustellen. Als Funktionalisierungsreagenzien können insbesondere alle polymeren und monomeren Stoffe eingesetzt werden, deren funktionelle Gruppen eine Reaktion mit Amingruppen eingehen können wie z.B. Epoxide, Säuren, Alkylhalogenide, Dialkylsulfate usw. Solches Vorgehen ist dem Fachmann an sich bekannt und er kann gewünschtenfalls mit Hilfe weniger Handversuche routinemäßig eine optionale Funktionalisierung einstellen. Es ist aber mehr bevorzugt, Pentaethylenhexamin als solches, ohne eine optionale Funktionalisierung, einzusetzen.

Das Pentaethylenhexamin kann grundsätzlich in jeder brauchbaren Menge in das Polyurethansystem eingearbeitet werden. Es entspricht allerdings einer bevorzugten Ausführungsform der Erfindung, wenn das Pentaethylenhexamin in einem Massenanteil von 0,0001 bis 10 Teilen, vorzugsweise 0,001 bis 5 Teilen, insbesondere 0,01 bis 3 Teilen, bezogen auf 100 Teile Polyolkomponente eingesetzt wird.

Zusätzlich zu dem erfindungsgemäß erforderlichem Einsatz von Pentaethylenhexamin können optional auch noch weitere Amine, wie z.B. andere aliphatische Polyamine zugesetzt werden, und zwar vorzugsweise mit einer Molmasse kleiner 500, vorteilhafterweise kleiner 300 und insbesondere kleiner 250 g/mol, umfassend vorteilhafterweise zumindest zwei oder mehr Amingruppen, z.B. Diethylentriamin, Triethylentetramin, Tetraethylenpentamin, Hexaethylenheptamin, Hexamethylendiamin, 1,8-Diaminotriethylenglykol, Tris(2-aminoethyl)amin. Ebenso können optional auch zusätzlich noch weitere Amine, wie z.B. Polyamine mit einer Molmasse größer 500 g/mol oder größer 1000 g/mol eingesetzt werden.

Das optionale, zusätzliche Polyamin kann beispielsweise in einem Massenanteil von 0,0001 bis 10 Teilen, vorzugsweise 0,001 bis 5 Teilen, insbesondere 0,01 bis 3 Teilen, bezogen auf 100 Teile Polyolkomponente eingesetzt wird und zwar zusätzlich zu dem Pentaethylenhexamin.

Es hat sich gezeigt, dass der Einsatz des Pentaethylenhexamins vorteilhafterweise sogar die Nachteile der in DE 10003156 A1 und DE 10258046 A1 genannten Verbindungen, ausgleichen kann. Das Pentaethylenhexamin hat sich als so exzellenter Aldehydfänger erwiesen, dass es sogar den durch die in DE 10003156 A1 und DE 10258046 A1 genannten Verbindungen induzierten Anstieg der Acetaldehyemission ausgleichen kann. Immer dann, wenn also aus anders gelagerten Gründen der Einsatz von Verbindungen wie in DE 10003156 A1 und DE 10258046 A1 trotzdem weiter erwünscht ist, können dessen unangenehme Nebenwirkungen, nämlich dem galoppierenden Anstieg der Acetaldeyhdemission, durch die Zugabe von Pentaethylenhexamin entgegengewirkt werden.

Die Herstellung der Polyurethansysteme kann ansonsten auf die übliche Weise und wie im Stand der Technik beschrieben erfolgen. Sie ist dem Fachmann wohlbekannt Eine grundsätzliche Übersicht findet sich z. B. in G. Oertel, Polyurethane Handbook, 2nd edition, Hanser/Gardner Publications Inc., Cincinnati, Ohio, 1994, p. 177-247. Es kommt lediglich darauf an, dass die Umsetzung in Gegenwart von Pentaethylenhexamin erfolgt.

Bei der erfindungsgemäßen Verwendung von Pentaethylenhexamin zur Herstellung der Polyurethanschaumstoffe kann es vorteilhaft sein, wenn außerdem Wasser, physikalische Treibmittel, Flammschutzmittel und/oder weitere Additive zugegeben werden.

Als Polyurethansystem wird ein Polyurethanschaum hergestellt.

Als Isocyanatkomponente können im Sinne dieser Erfindung alle Isocyanate, insbesondere die an sich bekannten aliphatischen, cycloaliphatischen, araliphatischen und vorzugsweise aromatischen mehrwertigen Isocyanate eingesetzt werden. Geeignete Isocyanate im Sinne dieser Erfindung sind vorzugsweise alle mehrfunktionalen organischen Isocyanate, wie beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4, sowie die verschiedenen Isomere des TDI in reiner Form oder als Isomerengemisch. Besonders bevorzugte Isocyanate sind Mischungen von TDI und MDI.

Als Polyolkomponente geeignete Polyole im Sinne dieser Erfindung sind vorzugsweise alle organischen Substanzen mit mehreren gegenüber Isocyanaten reaktiven Gruppen, sowie deren Zubereitungen einsetzbar. Bevorzugte Polyole sind alle zur Herstellung von Polyurethansystemen, insbesondere Polyurethanschaumstoffen üblicherweise verwendeten Polyetherpolyole und Polyesterpolyole. Die Polyole sind vorzugsweise keine Verbindungen, die mindestens einen 5- oder 6-gliedrigen Ring aufweisen, der aus ein oder zwei Sauerstoffatomen und Kohlenstoffatomen aufgebaut ist.

Polyetherpolyole können z. B. durch Umsetzung von mehrwertigen Alkoholen oder Aminen mit Alkylenoxiden gewonnen werden. Polyesterpolyole basieren vorzugsweise auf Estern mehrwertiger Carbonsäuren (die entweder aliphatisch, beispielsweise Adipinsäure, oder aromatisch, beispielsweise Phthalsäure oder Terephthalsäure, sein können) mit mehrwertigen Alkoholen (meist Glycolen). Zudem können auf natürlichen Ölen basierende Polyether (natural oil based polyols, NOPs) eingesetzt werden. Diese Polyole werden aus natürlichen Ölen wie z.B. Soja- oder Palmöl gewonnen und können unmodifiziert oder modifiziert verwendet werden.

Eine weitere Klasse von Polyolen sind solche, die als Prepolymere durch Umsetzung von Polyol mit Isocyanat in einem Molverhältnis von 100 zu 1 bis 5 zu 1, bevorzugt 50 zu 1 bis 10 zu 1 erhalten werden. Solche Prepolymere werden vorzugsweise gelöst in Polyol eingesetzt, wobei das Polyol bevorzugt dem zur Herstellung der Prepolymeren eingesetzten Polyol entspricht.

Noch eine weitere Klasse von einsetzbaren Polyolen stellen die sogenannten Füllkörperpolyole (Polymerpolyole) dar. Diese zeichnen sich dadurch aus, dass sie feste organische Füllstoffe bis zu einem Feststoffgehalt von 40 Gew.-% oder mehr in disperser Verteilung enthalten. Man kann unter anderem verwenden:
SAN-Polyole: Dies sind hochreaktive Polyole, welche ein Copolymer auf der Basis Styrol/Acrylnitril (SAN) dispergiert enthalten.
PHD-Polyole: Dies sind hochreaktive Polyole, welche Polyharnstoff ebenfalls in dispergierter Form enthalten.
PIPA-Polyole: Dies sind hochreaktive Polyole, welche ein Polyurethan, beispielsweise durch in situ-Reaktion eines Isocyanats mit einem Alkanolamin in einem konventionellen Polyol gebildet, in dispergierter Form enthalten.

Der Festkörperanteil, der je nach Anwendung bevorzugt zwischen 5 und 40 Gew.-%, bezogen auf das Polyol liegen kann, ist für eine verbesserte Zellöffnung verantwortlich, so dass das Polyol insbesondere mit TDI kontrolliert verschäumbar wird und kein Schrumpfen der Schäume auftritt. Der Festkörper wirkt damit als wesentliche Prozesshilfe. Eine weitere Funktion besteht darin, über den Feststoffanteil die Härte zu kontrollieren, denn höhere Festkörperanteile bewirken eine höhere Härte des Schaums.

Die Formulierungen mit feststoffhaltigen Polyolen sind deutlich weniger eigenstabil und bedürfen daher neben der chemischen Stabilisierung durch die Vernetzungsreaktion eher auch zusätzlich einer physikalischen Stabilisierung.

Je nach Feststoffgehalt der Polyole können diese alleine oder in Abmischung mit den oben genannten ungefüllten Polyolen eingesetzt werden.

Ein im Rahmen dieser Erfindung bevorzugtes Verhältnis von Isocyanatkomponente zu Polyolkomponnete, ausgedrückt als Index, liegt im Bereich von 10 bis 1000, bevorzugt 40 bis 350. Dieser Index beschreibt das Verhältnis von tatsächlich eingesetztem Isocyanat zu (für eine stöchiometrische Umsetzung mit Polyol) berechnetem Isocyanat. Ein Index von 100 steht für ein molares Verhältnis der reaktiven Gruppen von 1 zu 1.

Geeignete Katalysatoren, die im Sinne dieser Erfindung verwendet werden können, sind vorzugsweise Substanzen, die die Gelreaktion (Isocyanat-Polyol), die Treibreaktion (Isocyanat-Wasser) oder die Di- bzw. Trimerisierung des Isocyanats katalysieren. Typische Beispiele sind Amine, wie z.B. Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Zinnsalze organsicher Carbonsäuren, Zinnverbindungen wie Dibutylzinndilaurat und Kaliumsalze wie Kaliumacetat. Vorzugsweise werden als weitere Katalysatoren solche eingesetzt, die keine organische Zinnverbindungen, insbesondere kein Dibutylzinndilaurat enthalten.

Geeignete Einsatzmengen dieser Katalysatoren im Sinne dieser Erfindung richten sich nach dem Typ des Katalysators und liegen üblicherweise im Bereich von z.B. 0,01 bis 5 pphp (= Gewichtsteilen bezogen auf 100 Gewichtsteile Polyol) bzw. 0,1 bis 10 pphp für Kaliumsalze.

Geeignete Wasser-Gehalte im Sinne dieser Erfindung hängen davon ab, ob zusätzlich zum Wasser noch physikalische Treibmittel eingesetzt werden oder nicht. Bei rein Wasser-getriebenen Schäumen liegen die Werte typischerweise bei z. B. 1 bis 20 pphp, werden zusätzlich andere Treibmittel eingesetzt, verringert sich die Einsatzmenge auf üblicherweise z. B. 0 oder z. B.0,1 bis 5 pphp. Zur Erlangung hoher Schaumraumgewichte können z.B. weder Wasser noch andere Treibmittel eingesetzt werden.

Geeignete physikalische Treibmittel im Sinne dieser Erfindung sind Gase, beispielsweise verflüssigtes CO₂, und leichtflüchtige Flüssigkeiten, beispielsweise Kohlenwasserstoffe mit 4 oder 5 KohlenstoffAtomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, Sauerstoff-haltige Verbindungen wie Methylformiat und Dimethoxymethan, oder Chlorkohlenwasserstoffe, bevorzugt Dichlormethan und 1,2-Dichlorethan. Des Weiteren eignen sich Ketone (z.B. Aceton) oder Aldehyde (z.B. Methylal) als Treibmittel.

Als Stabilisatoren können die im Stand der Technik genannten Substanzen verwendet werden. Vorteilhafterweise können die erfindungsgemäß einzusetzenden Zusammensetzungen ein oder mehrere Stabilisatoren enthalten. Dabei handelt es sich insbesondere um Kohlenstoffatome aufweisende Siliziumverbindungen, vorzugsweise ausgewählt aus den Polysiloxanen, Polydimethylsiloxanen, organomodifizierten Polysiloxanen, polyethermodifizierten Polysiloxanen und Polyether-Polysiloxan-Copolymeren.

Als ein oder mehrere Kohlenstoffatome aufweisende Siliziumverbindungen können die im Stand der Technik genannten Substanzen verwendet werden. Vorzugsweise werden solche Si-Verbindungen eingesetzt, die für den jeweiligen Schaumtypen besonders geeignet sind. Geeignete Siloxane sind beispielsweise in den folgenden Schriften beschrieben: EP 0839852, EP 1544235, DE 10 2004 001 408, WO 2005/118668, US 20070072951, DE 2533074, EP 1537159 EP 533202, US 3933695, EP 0780414, DE 4239054, DE 4229402, EP 867465. Die Herstellung der Si-Verbindungen kann wie im Stand der Technik beschrieben erfolgen. Geeignete Beispiele sind z. B. in US 4,147,847, EP 0493836 und US 4,855,379 beschrieben.

Insbesondere können organisch modifizierte Si-Verbindungen eingesetzt werden. Besonders bevorzugte, einsetzbare organisch modifizierte Si-Verbindungen sind z.B. solche gemäß nachfolgender Formel (IV) ${M}_{k} {D}_{m} D {′}_{n} {T}_{o} {Q}_{p}$ (IV) mit
M = [R²R¹₂SiO_{1/2}]
D = [R¹R¹SiO_{2/2}]
D' = [R³R¹SiO_{2/2}]
T = [R¹SiO_{3/2}]
Q = [SiO_{4/2}]
k = 0 bis 22, bevorzugt 2 bis 10, besonders bevorzugt 2
m = 0 bis 400, bevorzugt 0 bis 200, besonders bevorzugt 2 bis 100
n = 0 bis 50, bevorzugt 0,5 bis 20, besonders bevorzugt 0,7 bis 9
o = 0 bis 10, bevorzugt 0 bis 5, insbesondere bevorzugt 0
p = 0 bis 10 bevorzugt 0 bis 5, insbesondere bevorzugt 0
R² = R¹ oder R³
R¹ = unabhängig voneinander Alkyl- oder Arylreste oder H, vorzugsweise Methyl, Ethyl, Propyl oder Phenyl, bevorzugt Methyl oder Phenyl
R³ = organische Modifikationen z.B. Polyether oder ein einwertiger Rest mit 1 bis 30 C-Atomen mit wenigstens einem Heteroatom ausgewählt aus der Gruppe N, S, O, P, F, Cl, Br

Bevorzugt sind R³ in Formel (IV) Reste aus der Gruppe,
- CH₂CH₂CH₂O[CH₂CH₂O]ₐ[CH₂CH(CH₃)O]_{b}[CHR⁴CHR⁴O]_{c}R⁵ -CH₂CH₂CH₂CN
- CH₂CH₂CF₃
- CH₂CH₂CH₂Cl
mit
R⁵ = Alkyl, Aryl, Urethan, Carboxyl, Silyl oder H, bevorzugt H, -Me, oder -C(O)Me
R⁴ = Alkyl, Aryl, die ggf. durch Sauerstoff unterbrochen sein können, insbesondere bevorzugt H, Me, Et oder Ph,
a = 0 bis 100, bevorzugt 0,5 bis 70, besonders bevorzugt 1 - 40
b = 0 bis 100, bevorzugt 0,5 bis 70, besonders bevorzugt 0 - 40
c = 0 bis 50, bevorzugt 0 bis 15, insbesondere bevorzugt 0
a + b + c > 3.

Insbesondere können unmodifizierte Si-Verbindungen eingesetzt werden.

Besonders bevorzugte, einsetzbare unmodifizierte Si-Verbindungen sind z.B. solche der nachfolgenden Formel (V) ${M}_{q} {D}_{r}$ (V) mit
M, D wie bei voriger Formel (IV) definiert, und
q=2
r = 0 bis 50, bevorzugt 1 bis 40, besonders bevorzugt 2 bis 30.

Besonders bevorzugt können die oben genannten Si-Verbindungen, insbesondere der Formel (IV) und/oder (V) einzeln oder in Kombination miteinander eingesetzt werden. In Fall von Mischungen kann zusätzlich ein Kompatibilisator eingesetzt werden. Dieser kann ausgewählt sein aus der Gruppe aliphatischer oder aromatischer Kohlenwasserstoffe, besonders bevorzugt aliphatische Polyether oder Polyester.

Es kann vorteilhaft sein, wenn in den Siloxanverbindungen der Formel (IV) mindestens 10 Äquivalenz-% (und höchstens 50 Äquivalenz-%) der Reste R² Alkyl-Gruppen mit 8 bis 22 Kohlenstoffatomen sind (bezogen auf die Gesamtzahl der Reste R2 in der Siloxanverbindung).

Vorzugsweise können von 0,05 bis 10 Massenteile Siliziumverbindungen pro 100 Massenteile Polyolkomponenten eingesetzt werden.

Insbesondere der Einsatz der vorgenannten Siliziumverbindungen in Kombination mit den erfindungsgemäß einzusetzenden Pentaethylenhexamin ermöglicht sehr gute Resultate im Hinblick auf die erfindungsgemäß angestrebten Polyurethane.

Neben oder an Stelle von Wasser und ggf. physikalischen Treibmitteln, können auch andere chemische Treibmittel, die mit Isocyanaten unter Gasentwicklung reagieren, wie beispielsweise Ameisensäure oder Carbonate in der erfindungsgemäß einzusetzenden Additivzusammensetzung vorhanden sein.

Geeignete optionale Flammschutzmittel im Sinne der vorliegenden Erfindung sind bevorzugt flüssige organische Phosphorverbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe wie Blähgraphit und Melamin geeignet.

Durch die Erfindung können Polyurethanschäume hergestellt werden, die besonders arm an Aldehydemissionen sind.

Die Bezeichnung Polyurethan ist im Sinne der Erfindung insbesondere als Oberbegriff für ein aus Di- bzw. Polyisocyanaten und Polyolen oder anderen gegenüber Isocyanat reaktive Spezies, wie z.B. Aminen, hergestelltes Polymer zu verstehen, wobei die Urethan-Bindung nicht ausschließlicher oder überwiegender Bindungstyp sein muss. Auch Polyisocyanurate und Polyharnstoffe sind ausdrücklich mit eingeschlossen.

Die erfindungsgemäße Herstellung von Polyurethanschaumstoffen kann nach allen dem Fachmann geläufigen Verfahren erfolgen, beispielsweise im Handmischverfahren oder bevorzugt mit Hilfe von Hochdruck- oder Niederdruck-Verschäumungsmaschinen. Das Verfahren kann kontinuierlich oder diskontinuierlich durchgeführt werden. Eine diskontinuierliche Durchführung des Verfahrens ist bevorzugt bei der Herstellung von Formschäumen, Kühlschränken oder Paneelen. Eine kontinuierliche Verfahrensführung ist bei der Herstellung von Dämmplatten, Metallverbundelementen, Blöcken oder bei Sprühverfahren bevorzugt.

In dem Verfahren kann das Pentaethylenhexamin vorzugsweise direkt vor oder aber auch erst während der Reaktion (zur Ausbildung der Urethanbindungen) zugemischt werden. Bevorzugt erfolgt die Zusammenführung/Zudosierung der Verbindung in einem Mischkopf, sowie auch in einem Batchverfahren für fertige Polyolsysteme.

Der Begriff des Pentaethylenhexamins umfasst im Sinne dieser Erfindung auch dessen verzweigte und cyclische Isomere. Pentaethylenhexamin, wie es in technischer Qualität kommerziell erhältlich ist, ist erfindungsgemäß einsetzbar und führt zu den von uns gefundenen Vorteilen. Insbesondere kann lineares Pentaethylenhexamin eingesetzt werden.

Beschrieben wird weiterhin ein Polyurethansystem, insbesondere Polyurethanschaum, hergestellt gemäß einem Verfahren wie zuvor beschrieben.

Die erhältlichen Polyurethansysteme können vorzugsweise 0,001 bis 10 Gew.-%, vorteilhafterweise 0,01 bis 5 Gew.-%, insbesondere 0,1 bis 3 Gew.-% Pentaethylenhexamin aufweisen, bezogen auf die Gesamtzusammensetzung des Polyurethansystems.

Die erhältlichen Polyurethansysteme können vorzugsweise z. B. ein Polyurethanhartschaum, ein Polyurethanweichschaum, ein viskoelastischer Schaum, ein HR-Schaum, ein halbharter Polyurethanschaum, ein thermoverformbarer Polyurethanschaum oder ein Integralschaum, bevorzugt ein Polyurethan HR-Schaum sein.

Die erhältlichen Polyurethansysteme, bevorzugt Polyurethanschäume, können z. B. als Kühlschrankisolierung, Dämmplatte, Sandwichelement, Rohrisolation, Sprühschaum, 1- & 1,5-Komponenten-Dosenschaum (ein 1,5-Komponenten-Dosenschaum ist ein Schaum der durch zerstören eines Behälters in der Dose erzeugt wird), Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum, Dichtmittel und Kleber oder zur Herstellung entsprechender Produkte verwendet werden.

Beschrieben wird weiterhin eine Zusammensetzung zur Herstellung von Polyurethanschaum, umfassend wenigstens einen Urethan- und/oder Isocyanurat-Katalysator, wenigstens ein Treibmittel, wenigstens eine Isocyanatkomponente und wenigstens eine Polyolkomponente, wobei als Additiv Pentaethylenhexamin enthalten ist. Der Begriff der Zusammensetzung in diesem Sinne umfasst auch Mehrkomponentenzusammensetzungen, bei denen zwei oder mehr Komponenten zu mischen sind, um eine chemische Reaktion zu erzeugen, welche zur Herstellung von Polyurethanschaum führt. Der Begriff der Zusammensetzung umfasst insbesondere das Gemisch (Mischung) wenigstens eines Urethan- und/oder Isocyanurat-Katalysators, wenigstens eines Treibmittels, wenigstens einer Isocyanatkomponente und wenigstens einer Polyolkomponente sowie von Pentaethylenhexamin.

Eine bevorzugte Zusammensetzung zur Herstellung von Polyurethanschaum kann Polyol z.B. in Mengen von 25 bis 75 Gew.-%, Wasser z.B. in Mengen von 1 bis 7 Gew.-%, Katalysator z.B. in Mengen von 0,05 bis 3 Gew.-%, physikalisches Treibmittel z.B. in Mengen von 0 bis 25 Gew.-% (z.B. 0,1 bis 25 Gew.-%), Stabilisatoren (wie z. B. Si-haltige und nicht Si-haltige, insbesondere Si-haltige und nicht Si-haltige organische Stabilisatoren und Tenside) z.B. in Mengen von 0,3 bis 5 Gew.-%, Isocyanat z.B. in Mengen von 20 bis 50 Gew.% und das erfindungsgemäß einzusetzende Pentaethylenhexamin z.B. in Mengen von 0,00001 bis 5 Gew.-% (vorzugsweise 0,00005 bis 2,5 Gew.-%), enthalten.

Bezüglich bevorzugter Ausführungsformen dieser vorgenannten Zusammensetzungen wird insbesondere mit Blick auf das einzusetzende Pentaethylenhexamin auf die vorangegangene Beschreibung verwiesen.

Beschrieben wird weiterhin ein Verfahren zur Erniedrigung der Aldehydgesamtemission, vorzugsweise umfassend Emissionen von Formaldehyd, Acetaldehyd, Propionaldehyd, Acrolein, sowie auch aromatischen Aldehyden, wie Benzaldehyd, vorteilhafterweise Aldehydemissionen umfassend Formaldehyd, Propionaldehyd, Acetaldehyd, Acrolein und Benzaldehyd, insbesondere Aldehydemissionen umfassend Formaldehyd, Propionaldehyd und Acetaldehyd aus Polyurethansystemen (insbesondere Polyurethanschaumstoffen) durch Zugabe von Pentaethylenhexamin, wie zuvor beschrieben, zu dem Polyurethansystem (insbesondere Polyurethanschaumstoff), vorzugsweise in einer Menge von 0,0001 bis 10 Gew.-%, vorteilhafterweise 0,01 bis 5 Gew.-%, insbesondere 0,1 bis 3 Gew.-% bezogen auf das Gesamtgewicht des Polyurethansystems (insbesondere Polyurethanschaumstoffs), wobei die Zugabe vor, während oder nach der Herstellung des Polyurethansystems (insbesondere des Polyurethanschaumstoffs) erfolgen kann.

Beschrieben wird weiterhin ein Polyurethansystem (insbesondere Polyurethanschaumstoff), enthaltend Pentaethylenhexamin, wie zuvor beschrieben, in einer Menge von vorzugsweise 0,0001 bis 10 Gew.-%, vorteilhafterweise 0,01 bis 5 Gew.-%, insbesondere 0,1 bis 3 Gew.-% bezogen auf das Gesamtgewicht des Polyurethansystems (insbesondere Polyurethanschaumstoffs), insbesondere erhältlich durch Zugabe von Pentaethylenhexamin vor, während oder nach der Herstellung des Polyurethansystem, insbesondere Polyurethanschaumstoffs.

Gegenstand der Erfindung ist die Verwendung von Pentaethylenhexamin, wie zuvor beschrieben, zur Herstellung von Polyurethanschaumstoffen, die emissionsarm bezüglich Aldehyden sind, umfassend Formaldehyd, Acetaldehyd, Acrolein, Propionaldehyd- und Benzaldehydemissionen, insbesondere emissionsarm bezüglich Formaldehyd, Propionaldehyd und Acetaldehyd sind.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

**Tabelle 1: Rohstoffe zur Herstellung der Schaumformteile**

| | |
|---|---|
| Polyol 1 | Polyetherol trifunktionell, MW 6000, Bayer Material Science AG |
| Polyol 2 | Polyetherol trifunktionell, MW 4500, Dow Chemicals |
| Vernetzer | Tegoamin DEOA 85 (Diethanolamin 85% in Wasser), Evonik Industries AG |
| Katalysator | Tegoamin ZE1 (1,1'-{[3-(dimethylamino)propyl]imino}bispropan-2-ol), Evonik Industries AG |
| Silikonstabilisator | Tegostab B 8734 LF 2, Evonik Industries AG |
| Isocyanat | Methylendiisocyanat, Suprasec 6506, NCO=29,3%, Huntsman |

**Tabelle 2: Verwendete Additive**

| Additive | Beschreibung |
|---|---|
| Additiv 1 | Lupasol PR 8515 (Polyethylenimin), BASF Ludwigshafen |
| Additiv 2 | Pentaethylenhexamin (technische Qualität), Aldrich |
| Additiv 3 | Acetaldehyd |
| Additiv 4 | Benzaldehyd |

### Beispiel 1: Herstellung von Polyurethan-Schäumen:

Die Durchführung der Verschäumungen erfolgte im Handmischverfahren. Dazu wurden Polyol, Vernetzer, Katalysator, Additiv, Wasser und Silikonstabilisator in einen Becher eingewogen und mit einem Flügelrührer 60s bei 1000 Upm vorgemischt. Anschließend wurde das Isocyanat zugegeben und bei einer Rührerdrehzahl von 2500 Upm 7s eingerührt. Das Reaktionsgemisch wurde in eine auf 57°C temperierte Kastenform (Abmessungen 40x40x10cm) eingefüllt und verschlossen. Der fertige Schaum wurde nach 3,5 Minuten entformt. Die verwendeten Einsatzmengen und Edukte können Tabelle 3 entnommen werden.

Die nach dem oben beschriebenen Verfahren hergestellten Formschäume wurden dann in Anlehnung an die VDA 275 (VDA 275 "Formteile für den Fahrzeuginnenraum - Bestimmung der Formaldehydabgabe". Messverfahren nach der modifizierten Flaschen-Methode; Quelle: VDA 275, 07/1994, www.vda.de) auf ihren Formaldehyd-, Acetaldehyd- und Propionaldehydgehalt analysiert. Für die Bestimmung des Benzaldehydgehaltes wurde die VDA 278 in der Version von Oktober 2011 verwendet (Herausgeber/Editor: VERBAND DER AUTOMOBILINDUSTRIE E. V. (VDA); Behrenstr. 35; 10117 Berlin; www.vda.de).

### VDA 275

### Messprinzip

Bei der Methode wurden Probekörper einer bestimmten Masse und Abmessung über destilliertem Wasser in einer geschlossenen 11-Glasflasche befestigt und bei konstanter Temperatur über eine definierte Zeit gelagert. Danach kühlte man die Flaschen ab und bestimmte im destillierten Wasser den absorbierten Formaldehyd. Die ermittelte Formaldehydmenge wurde auf trockenes Formteilgewicht bezogen (mg/kg).

### Analytik

### Prüfkörper: Probenvorbereitung, Probenahme und Probekörperabmessungen

Nach dem Entformen der Schäume wurden diese 24 Stunden bei 21°C und ca. 50% relativer Luftfeuchte gelagert. Es wurden dann Probekörper gleichmäßig verteilt über die Breite des (abgekühlten) Formteils an geeigneten und repräsentativen Stellen entnommen. Danach wurden die Schäume in eine Aluminium-Folie eingeschlagen und in einem Polyethylenbeutel versiegelt.

Die Größe der Probekörper betrug jeweils 100x40x40mm Dicke (ca. 9g). Pro Formteil wurden 3 Probekörper für die Formaldehydbestimmung entnommen.

### Durchführung der Prüfung: Aldehydabgabe

Direkt nach Erhalt der versiegelten Probekörper wurden diese der Direktbestimmung zugeführt. Die Proben wurden vor Beginn der Analyse auf der Analysenwaage auf 0,001g genau ausgewogen. In die verwendeten Glasflaschen wurden jeweils 50 ml destilliertes Wasser pipettiert. Nach Anbringung der Probekörper in der Glasflasche wurde das Gefäß geschlossen und über 3 Stunden im Wärmeschrank bei einer konstanten Temperatur von 60°C verwahrt. Nach Ablauf der Prüfzeit wurden die Gefäße aus dem Wärmeschrank genommen. Nach 60 Minuten Standzeit bei Raumtemperatur wurden die Probekörper aus der Prüfflasche entfernt. Anschließend erfolgte die Derivatisierung nach der DNPH-Methode (Dinitrophenylhydrazin). Dazu werden 900 µl der Wasserphase mit 100µl einer DNPH Lösung versetzt. Die DNPH-Lösung ist wie folgt hergestellt: 50mg DNPH in 40mL MeCN (Acetonitril) werden mit 250 µL HCl (1:10 verd.) angesäuert und auf 50 mL mit MeCN aufgefüllt. Nach der erfolgten Derivatisierung wird eine Probe mittels HPLC analysiert. Es erfolgt eine Auftrennung in die einzelnen Aldehyd-Homologen.

### Geräteparameter HPLC

Es wurde das folgende Gerät für die Analyse verwendet:
Agilent Technologies 1260
Chromatographiesäule: Phenomenex Luna 250*4,6mm C18, 5µ Teilchengröße
Laufmittel: Wasser Acetonitril Gradient
Detektion: UV 365 nm

### VDA 278

### Messprinzip

Die Werkstoffe werden hinsichtlich Art und Menge der aus ihnen ausgasbaren organischen Substanzen charakterisiert. Dazu werden zwei halbquantitative Summenwerte bestimmt, die eine Abschätzung der Emission von leichtflüchtigen organischen Verbindungen (VOC Wert), sowie den Anteil kondensierbarer Substanzen (Fog-Wert) ermöglichen. Ferner werden Einzelsubstanzen der Emission bestimmt. Bei der Analyse werden die Proben thermisch extrahiert, die Emissionen gaschromatografisch aufgetrennt und massenspektrometrisch detektiert. Die so erhaltenen Gesamtkonzentrationen für den VOC-Anteil werden in Toluol-Äquivalenten berechnet und ergeben als Ergebnis den VOC-Wert, der FOG-Anteil wird in Hexadecan-Äquivalenten dargestellt und ergibt den FOG-Wert.

Das Analysenverfahren dient zur Ermittlung von Emissionen aus nichtmetallischen Materialien, die für Formteile in Kraftfahrzeugen zum Einsatz kommen, dazu gehören auch Schaumstoffe.

Bei der Thermodesorptionsanalyse (TDS) werden geringe Materialmengen in einem Desorptionsrohr definiert aufgeheizt, die dabei emittierenden flüchtigen Substanzen mit Hilfe eines Inertgas-Stromes in einer Kühlfalle eines Temperatur-programmierbaren Verdampfers kryofokusiert. Nach Beendigung der Ausheizphase wird die Kühlfalle rasch auf 280°C erhitzt. Dabei verdampfen die fokussierten Substanzen. Sie werden anschließend in der gaschromatografischen Trennsäule aufgetrennt und massenspektrometrisch detektiert. Durch Kalibration mit Bezugssubstanzen ist eine halbquantitative Abschätzung der Emission, ausgedrückt in "µg/g", möglich. Als quantitative Bezugssubstanzen werden Toluol für die VOC-Analyse (VOC-Wert) und n-Hexadecan für den Fog-Wert verwendet. Anhand ihrer Massenspektren und Retentionsindizes können Signalpeaks Substanzen zugeordnet werden. Quelle: VDA 278/10.2011, www.vda.de

Die ermittelte Benzaldehydmenge wurde auf Toluol-Äquivalente bezogen (µg/g).

### Analytik

### Prüfkörper: Probenvorbereitung, Probenahme und Probekörperabmessungen

Nach dem Entformen der Schäume wurden diese 24 Stunden bei 21°C und ca. 50% relativer Luftfeuchte gelagert. Es wurden dann Probekörper gleichmäßig verteilt über die Breite des (abgekühlten) Formteils an geeigneten und repräsentativen Stellen entnommen. Danach wurden die Schäume in eine Aluminium-Folie eingeschlagen und in einem Polyethylenbeutel versiegelt.

Die Menge der Schaumproben, die in das Desorptionsröhrchen eingeführt wurde, betrug jeweils 10-15 mg.

### Durchführung der Prüfung: VOC/FOG Thermodesorption

Direkt nach Erhalt der versiegelten Probekörper wurden diese der Direktbestimmung zugeführt. Die Proben wurden vor Beginn der Analyse auf der Analysenwaage auf 0,1mg genau ausgewogen und die entsprechende Schaummenge in dem Desorptionsröhrchen mittig plaziert. Ein Heliumstrom wurde über die Probe geleitet und diese auf 90°C für 30 Minuten aufgeheizt. Alle flüchtigen Substanzen wurden in einer Kühlfalle, die mit flüssigem Stickstoff gekühlt wurde, aufgefangen. Nach 30 Minuten wurde die Kühlfalle auf 280°C aufgeheizt. Die verdampfenden Substanzen wurden mittels der beschriebenen gaschromatographischen Säule voneinander getrennt und anschließend massenspektroskopisch analysiert.

### Geräteparameter GC-MS

Es wurde das folgende Gerät für die Analyse verwendet:
Fa. Gerstel
D-45473 Mühlheim an der Ruhr,
Eberhard-Gerstel-Platz 1 TDS-3 / KAS-4
Tenax®-Desorptionsröhrchen
Agilent Technologies 7890A (GC) / 5975C (MS)
Säule: HP Ultra2 (50m, 0,32mm, 0,52µm)
Trägergas: Helium

**Tabelle 3: Formulierung zur Herstellung der Formteile und Ergebnisse der Formaldehyd-, Acetaldehyd-Propionaldehyd- und Benzaldehydmessungen**

| Beispiele | V1 | V2 | EM1 | V3 | EM2 | V4 | EM3 |
|---|---|---|---|---|---|---|---|
| Polyol 1 | 100 | 100 | 100 | 100 | 100 | 100 | 100 |
| Polyol 2 | 3,5 | 3,5 | 3,5 | 3,5 | 3,5 | 3,5 | 3,5 |
| Wasser | 3,1 | 3,1 | 3,1 | 3,1 | 3,1 | 3,1 | 3,1 |
| Vernetzer | 0,6 | 0,6 | 0,6 | 0,6 | 0,6 | 0,6 | 0,6 |
| Katalysator | 1,1 | 1,1 | 1,1 | 1,1 | 1,1 | 1,1 | 1,1 |
| Silikonstabilisator | 0,7 | 0,7 | 0,7 | 0,7 | 0,7 | 0,7 | 0,7 |
| Isocyanat Index 83 | 44,36 | 44,36 | 44,36 | 44,36 | 44,36 | 44,36 | 44,36 |
| | | | | | | | |
| Ohne Additiv | x | | | | | | |
| Additiv 1 | | 1,0 | | | | | |
| Additiv 2 | | | 1,0 | | 1,0 | | 0,5 |
| Additiv 3 | | | | 0,01 | 0,01 | | |
| Additiv 4 | | | | | | 0,005 | 0,005 |
| Formaldehydemissionen ppm (VDA 275, mod.) | 1,43 | 0,00 | 0,00 | 1,45 | 0,03 | | |
| Blindwert Formaldehyd / ppm | 0,02 | 0,02 | 0,02 | 0,02 | 0,02 | | |
| Acetaldehydemissionen ppm (VDA 275, mod.) | 0,11 | 5,78 | 0,08 | 4,96 | 3,01 | | |
| Blindwert Acetaldehyd / ppm | 0,02 | 0,02 | 0,02 | 0,02 | 0,02 | | |
| Propionaldehydemissionen ppm (VDA 275, mod.) | 0,64 | 0,84 | 0,51 | | | | |
| Blindwert Propionaldehyd / ppm | 0,01 | 0,01 | 0,01 | | | | |
| Benzaldehydemissionen VOC ppm (VDA 278) | | | | | | 20 | <1 |

Die Verschäumergebnisse zeigen, dass bei Zusatz des Additives 1 (V2) zwar eine signifikante Erniedrigung der Formaldehydemissionen erreicht wird, die Acetaldehydemission aber um mehr als das 50-fache höher ist, als der Vergleichsschaum ohne Additiv (V1). Ebenfalls sei hier noch auf einen erhöhten Propionaldehydgehalt hingewiesen. Bei Zugabe von Additiv 2 hingegen zeigt sich eine positive Wirkung in Form einer Verringerung der auftretenden Formaldehydemissionen, die an der Nachweisgrenze liegen, sowie ein ebenfalls reduzierter Acetaldehydgehalt (EM1) und auch ein positiver Effekt auf die Propionaldehydemissionen ist zu verzeichnen. Aufgrund der niedrigen Gehalte von Acetaldehyd bereits im Standardschaum ohne Additiv (V1) wurde dem Schaum vor der Verschäumung gezielt eine kleine Menge Acetaldehyd (Additiv 3) als Verunreinigung zugegeben, um die Anteile zu erhöhen und so das Ergebnis signifikanter darstellen zu können (V3). Auch in diesem Fall zeigt sich, dass die Zugabe von Additiv 2 eine ganz erhebliche Erniedrigung des Acetaldehydgehaltes zur Folge hat (EM2). Ebenfalls konnte auch eine signifikante Reduktion des Propionaldehydgehaltes beobachtet werden. Das Vergleichsbeispiel V4 zeigt die Benzaldehydemissionen, die bei Zugabe des Additivs 4 mittels der VDA 278 im VOC-Teil gemessen werden. Nach Zugabe des erfindungsgemäßen Additivs 2 lässt sich dieser Wert bis auf die Bestimmungsgrenze erniedrigen.

Die Verschäumergebnisse zeigen, dass sich durch Zugabe des erfindungsgemäß einzusetzenden Additivs, also Pentaethylenhexamin, PU-Schäume mit verminderten Emissionen an Formaldehyd-, Acetaldehyd-, Propionaldehyd und auch Benzaldehyd herstellen lassen.

## Patentansprüche

1. Verwendung von Pentaethylenhexamin zur Herstellung von Polyurethanschaumstoffen, die emissionsarm bezüglich Aldehyd sind, umfassend Formaldehyd-, Acetaldhyd-, Propionaldehyd-, Acrolein- und Benzaldehydemissionen.

2. Verwendung gemäß Anspruch 1,
durch Umsetzung mindestens einer Polyolkomponente mit mindestens einer Isocyanatkomponente in Gegenwart eines oder mehrerer Katalysatoren, die die Reaktionen Isocyanat-Polyol und/oder Isocyanat-Wasser und/oder die Isocyanat-Trimerisierung katalysieren, wobei die Umsetzung in Gegenwart von Pentaethylenhexamin erfolgt.

3. Verwendung nach Anspruch 2, **dadurch gekennzeichnet, dass** Pentaethylenhexamin in einem Massenanteil von 0,0001 bis 10 Teilen, vorzugsweise 0,001 bis 5 Teilen, insbesondere 0,01 bis 3 Teilen bezogen auf 100 Teile Polyolkomponente eingesetzt wird.

## Claims

1. Use of pentaethylenehexamine for production of polyurethane foams that are low-emission with regard to aldehyde, including formaldehyde, acetaldehyde, propionaldehyde, acrolein and benzaldehyde emissions.

2. Use according to Claim 1,
by reacting at least one polyol component with at least one isocyanate component in the presence of one or more catalysts for the isocyanate-polyol and/or isocyanate-water reactions and/or the trimerization of isocyanate, wherein the reaction is carried out in the presence of pentaethylenehexamine.

3. Use according to Claim 2, **characterized in that** pentaethylenehexamine is used in a mass fraction of 0.0001 to 10 parts, preferably 0.001 to 5 parts, in particular 0.01 to 3 parts based on 100 parts of polyol component.

## Revendications

1. Utilisation de pentaéthylènehexamine pour la préparation de mousses de polyuréthane qui n'émettent que de faibles quantités d'aldéhyde, comprenant des émissions de formaldéhyde, d'acétaldéhyde, de propionaldéhyde, d'acroléine et de benzaldéhyde.

2. Utilisation selon la revendication 1, par la transformation d'au moins un composant de polyol avec au moins un composant d'isocyanate en présence d'un ou plusieurs catalyseurs qui catalysent les réactions isocyanate-polyol et/ou isocyanate-eau et/ou la trimérisation d'isocyanate, la transformation étant réalisée en présence de pentaéthylènehexamine.

3. Utilisation selon la revendication 2, **caractérisée en ce que** la pentaéthylènehexamine est utilisée en une proportion en masse de 0,0001 à 10 parties, de préférence 0,001 à 5 parties, en particulier 0,01 à 3 parties par rapport à 100 parties de composant de polyol.
